# EUROPEAN PATENT SPECIFICATION

(11) **EP 2 074 916 B1**
(45) Date of publication and mention of the grant of the patent: **27.10.2010**
(21) Application number: 08171817.3
(22) Date of filing: 16.12.2008
(51) Int. Cl.: A47J 31/36, A47J 31/52

(54) **Espresso coffee machine provided with an improved control of the pump and control method**
Mit einer verbesserten Pumpensteuerung ausgestattete Espressokaffeemaschine und Steuerungsverfahren
Machine à expresso dotée d'une commande améliorée de la pompe et procédé de commande

(30) Priority: 28.12.2007 IT MI20072446
(43) Date of publication of application: 01.07.2009
(73) Proprietor: Tenacta Group S.p.A., 24052 Azzano S. Paolo (BG) (IT)
(72) Inventor: Morgandi, Arturo, 24129, Bergamo BG (IT)
(74) Representative: Faraggiana, Vittorio

(56) References cited:
- EP-A- 0 687 436
- DE-C1- 4 139 804
- US-A- 4 242 568
- US-A- 5 619 902
- US-A1- 2006 096 465

## Description

The present invention refers to an espresso coffee machine of the type provided with a dispenser pump which conveys hot water under pressure to a filter holder containing coffee powder. The invention also refers to a method for controlling the pump of a such machine,

In such machines the quantity and/or quality of the dispensed beverage is variable at times in a noticeably random manner due to the uncontrolled pressure variations of the water supplied by the pump to the coffee powder in the infuser.

US-A-2006/0096465 provides a method and apparatus wherein fluctuations of the machine power supply voltage are measured and, on the basis of this measurement, the pump power supply is controlled, so as to adjust water flow and temperature.

A general object of the present invention is to overcome the abovementioned drawbacks by providing an espresso coffee machine which - due to an improved control of the pump - allows rendering the quality/quantity of the beverage dispensed by the machine more uniform and repeatable.

Regarding such object, according to the invention, conceived was a machine for preparing a coffee beverage according to claim 1.

Still according to the principles of the invention conceived was a method for the electric power supply of the pump of a machine for preparing an espresso coffee beverage according to claim 17. In order to explain the innovative principles and the advantages of the present invention with respect to the prior art better, described hereinafter - with the help of the attached drawings - are possible embodiments applying such principles. In the drawings:
- figure 1 represents a schematic view of an espresso coffee machine made according to the invention;
- figure 2 represents a variant embodiment of the machine of figure 1;
- figure 3 represents a schematic view of a further espresso coffee machine made according to the invention.

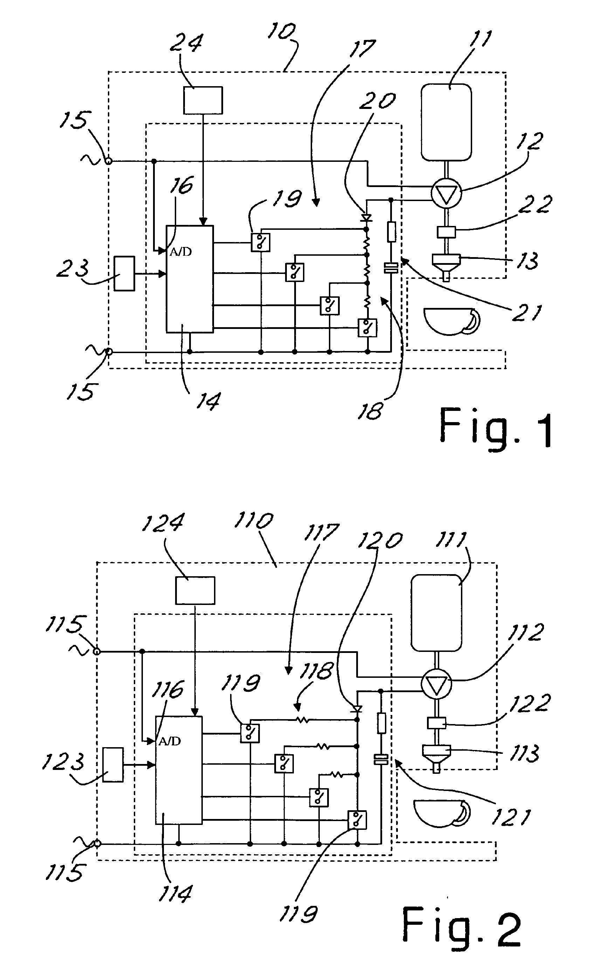

Referring to the figures, shown in figure 1 is a block diagram of a machine for preparing an espresso coffee beverage, indicated generally with 10, made according to the invention.

The machine 10 comprises a known source of hot water 11 (for example, a container with an electric boiler) from which an electric pump 12, advantageously of the volumetric type, draws the hot water and conveys it under pressure to a known infuser group 13 containing the coffee powder. The infuser group may be, for example, a filter holder onto which the coffee powder or capsule is placed. The coffee beverage produced is dispensed from the infuser group to the external.

The machine comprises a circuit 14 for measuring an electric quantity depending on the supply voltage 15 of the machine. Such quantity can directly be the supply voltage of the machine or its fraction, or, for example, an electric current produced by such voltage in a suitable resistor, etc, as easily imaginable by a man skilled in the art. In the typical embodiment, the circuit 14 shall be made with a known suitably programmed microcontroller and it shall comprise an analogue/digital converter input 16 onto which the quantity to be measured is applied.

The circuit 14 is for controlling means 17 for selecting a voltage drop in series with respect to the pump depending on the quantity measured to bring the supply voltage of the pump within a preset interval. In particular, the selection means comprise current drop resistors 18 which are insertable in series with respect to the pump power supply through associated switches 19 controlled by the circuit 14.

The controlled switches can advantageously be SCRs whose control gate is controlled by suitable output pins of the microcontroller 14.

A known dispenser control 23, for example a timed switch, controls the actuation of the pump to dispense the beverage for a preset period of time (or adjustable in a known manner) .

In the embodiment of figure 1, the electric resistors 18 are all in series with respect to each other and the associated controlled switches are connected to selectively short-circuit one or more resistors of the series. Also present in serves with respect to the pump is a half-wave rectifier diode 20. Also provided for can be a suitable "snubber" filter 21, for example of the RC type, for suppressing electric transistors.

The circuit 14 controls the switches 19 for inserting a preset resisted value to the pump in series according to the supply voltage of the machine, in such a manner to maintain the supply voltage of the pump at a preset value (equivalent or smaller than the one of the minimum power supply of the machine provided for). It was found out that in such manner the repeatability and stability of the quality and quantity of the dispensed beverage is more than satisfactory under any condition. As a matter of fact, it was found out that - in the machines of the prior art - the sudden and random deterioration of the quality and quantity of the beverage are due to unexpected fluctuations of the supply voltages which temporarily degrade the performances of the pumps and prevent the intervention of the outlet restrictor valve at the right pressure.

In order to restrict the number of switches and drop resistors, the measuring and control circuit advantageously has a given number of set preset intervals of the machine power supply voltage threshold. It was found advantageous that in particular such set preset intervals of the machine power supply voltage are between three and ten, preferably four. Associated to each interval, in series with respect to the pump, is a different drop resistor value. In the embodiment of figure 1, considering actuating the switches 19 one at a time (the highest switch is actuated in the minimum voltage interval while the lowest switch is actuated in the maximum voltage interval), the resistors in series are three. It was advantageously found that associated to a minimum level interval of machine power supply be a resistor value substantially equivalent to zero. This implies that the highest switch 19 short-circuits all resistors.

The measuring and control circuit 14 is made to determine, starting from the quantity measured, the interval within which the actual machine power supply voltage lies and control the connection of the associated drop resistor value to bring the pump supply voltage back to the preset interval.

Among the possible distributions of the interval thresholds it was found particularly advantageous that the set preset intervals of the machine power supply voltage be equally distributed between a preset maximum value and a preset minimum value of the machine power supply voltage.

It was found advantageous that for a preset variability of the machine power supply voltage of about more or less 10% more or less, the desired variation interval of the pump power supply be at least about 3% more or less.

Advantageously, present between a pump and an infuser can also be a suitable per se known pressure limiting device 22, calibrated to a suitable value deemed ideal for the quality of the beverage (for example, advantageously 18 bars). Thus the pump is selected to have an outlet pressure at least equivalent to such value at its minimum power supply voltage. The outlet pressure of the pump increases as its supply voltage increases. Thus the outlet pressure is stabilised on the infuser even in the single variability interval of the pump power supply voltage and an optimal pressure constancy through the coffee dust is obtained regardless of the machine power supply voltage in its preset maximum variability interval.

It was also found particularly advantageous that provided for be a control or sensor 24 which detects or sets the type of filter used from time to time on the machine, in such a manner that the pump power supply, and hence its capacity, be predetermined for each type of filter that the machine can use. Present in the microprocessor there can be a memorised table or calculation schedule which associates to the type of filter and the measured supply voltage a corresponding voltage or voltage interval of actual pump power supply.

Indicated in the following table are intervention intervals of the power supply system found particularly useful for a 230 V (nominal) power network. Considered for such network was a preset minimum value of about 198 V and a preset maximum value of about 254 V. With values within such range it was found advantageous to maintain the pump power supply voltage within an interval of about 198-212 V (i.e. equivalent to the lowest interval of the machine power supply voltage, for which the pump is thence connected directly to the network).

| | Power supply voltage interval |
|---|---|
| 1 | from 198 to 212 (198+14) |
| 2 | from 213 to 226 (198+28) |
| 3 | from 227 to 240 (198+42) |
| 4 | from 241 to 254 (198+56) |

Shown in figure 2 is a coffee machine, generally indicated with 110, which has a variant of the circuit of figure 1, operating in a substantially analogous manner. Elements substantially identical to the ones of figure 1 are indicated with the same number increased by one hundred.

Thus, it is obtained that the machine 110 comprises a known source of hot water 111, an electric pump 112, an infuser group 113 and a possible known pressure limiting device 122, calibrated as described above.

The machine comprises a measuring and control circuit 114 which can still be made with a known suitably programmed microcontroller and which shall comprise an analogue/digital converter input 116 applied on which shall be the quantity to be measured. The machine is supplied by a source of electric power 115. A control device 123 actuates the dispensing operation.

The circuit 114 controls means 117 for selecting the drop of voltage in series with respect to the pump depending on the quantity measured to bring the pump power supply voltage within the preset interval.

Contrary to the circuit of figure 1, the selection means 117 comprise current drop resistors 11B which are connected either singularly or parallel to each other and not in series as in figure 1. A diode 120 can still be provided for in series with respect to the pump and also provided for can be an RC filter circuit 121.

Still advantageously provided for can be a control or sensor 124 which detects or sets the type of filter used from time to time on the machine, analogously and for the aforementioned purpose referring to the embodiment of figure 1. Thus, present in the microprocessor 114 shall be a memorised table or calculation schedule associating to the filter and to the measured power supply voltage a corresponding voltage or voltage interval of actual pump power supply.

A man skilled in the art shall understand how the circuit of figure 2 shall operate with the same intervals already described in figure 1. The parallel of a plurality of resistors may also allow obtaining intermediate intervals for a more accurate adjustment.

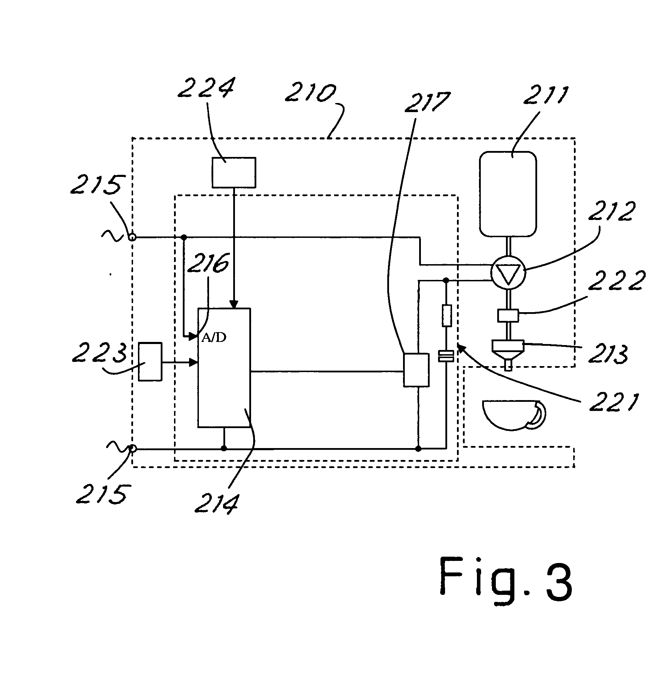

Shown in figure 3 is another embodiment of the machine according to the invention. Numbers used in this figure are similar to those of figure 1, but increased by 200.

The machine 210 comprises a known source of hot water 211 (for example, a container with an electric boiler) from which an electric pump 212, advantageously of the volumetric type, draws the hot water and conveys it under pressure to a known infuser group 213 containing the coffee powder, advantageously through a pressure limiting device 222 calibrated on the pressure deemed ideal. The infuser group may be, for example, a filter holder onto which the coffee powder or capsule is placed. The coffee beverage produced is dispensed from the infuser group to the external.

The machine comprises a circuit 214 for measuring an electric quantity depending on the machine power supply voltage 215. Just like in the previous embodiments, the quantity can directly be the machine power supply voltage or its fraction, or also an electric current produced by such voltage in a suitable resistor, etc. In the typical embodiment, the circuit 214 shall be made with a suitably programmed microcontroller and shall comprise an analogue/digital converter input 216 applied onto which shall be the quantity to be measured. The circuit 214 is for controlling means 217 for selecting a pump power supply depending on the quantity measured to bring the pump power supply voltage within a preset interval. In particular, in the embodiment of figure 3, the selection means comprise a semiconductor switch element 217 (IGBT, TRIAC, Power MOSFET, etc.) which provides, through a suitable control of the microcontroller, regulator with phase cutting device, per se known to a man skilled in the art. As known, in a phase cutting control, the adjustment of voltage on the load is obtained by delaying the striking or by anticipating the interruption of the passage of current in the single half-wave. The value of the anticipation or delay shall be calculated by the microcontroller 214 according to the measured network voltage and possibly according to the type of filter used, detected or set through a sensor or control 224. For example, the microcontroller acquires the network voltage and determines the moment when it crosses the positive zero point (positive-zero crossing point) and the root-mean-square value.

According to the root-mean-square value thus measured and the type of filter present (fir example, coffee or moka), the microcontroller calculates the delay by which the switching element 217 is actuated with respect to the positive zero-crossing instant. The enabling of the digital output of the microcontroller ceases before the negative zero-crossing point, in such a manner that the switching element is disabled automatically as soon as the current that crosses it is nullified (this occurs with a given delay with respect to the positive zero-crossing, due to the inductance of the pump). The enabling delay, advantageously calculated by the microcontroller through special tables, ensures that, for each of the types of filter provided for, the capacity of the pump be predetermined and almost constant even though the root-mean-square value of the network voltage varies within a preset interval. The known dispensing control 223 controls the machine to dispense the beverage. Also provided for can be a suitable "snubber" filter 221, for example of the RC type, for suppressing electric transistors. Considerable among the parameters that might intervene in the calculation may also be the number of dispensing operations, advantageously memorised in a semiconductor non-volatile internal memory. The number of dispensing operations can be counted simultaneously both from the first operation and from the last time the machine was switched on. Depending on the dispensing operations performed, the microcontroller varies the switching delay also for compensating the capacity variations of the pump both in short and long terms, mainly due to the heating of the pump during the subsequent dispensing operations and the ageing of the pump.

At this point, it is clear how the preset objects are attained, providing a method for controlling the pump of a machine for preparing an espresso coffee beverage, which provides for automatically positioning in series - with respect to the pump - a preset current drop resistor for compensating a variation of the machine power supply voltage and thus bring the pump power supply voltage within a preset variation interval. The described circuits are easy to make and inexpensive, but they allow attaining a great improvement in the operation of the machine.

Obviously, the description outlined above regarding an embodiment applying the innovative principles of the present invention is provided for exemplifying such innovative principles and thus shall not be deemed to restrict the scope of the patent herein described. For example, the machine may comprise all the further elements and accessories typical of the espresso coffee machine, as easily imaginable by a man skilled in the art. The exact resistors value shall depend on the electric characteristics of the pump, as easily imaginable and calculable by a man skilled in the art. The power supply variations, also depending on the number of actuations of the machine, may also be provided for in the embodiments of figures 1 and 2, as easily imaginable by a man skilled in the art.

## Claims

1. Machine for preparing a coffee beverage comprising a source (11, 111, 211) of hot water, an electric pump (12, 112, 212) for conveying such water to an infuser group (13, 113, 213) containing the coffee powder and a circuit (14, 114, 214) for measuring an electric quantity depending on the power supply voltage of the machine and for controlling selection means (17, 117, 217) for selecting a pump power supply depending on the measured quantity to bring the pump power supply voltage within a preset interval, **characterised in that** arranged in series at the pump outlet is a pressure limiting device (22, 122, 222) calibrated at a preset value and the pump (12, 112, 212), at its minimum supply voltage, has an outlet with pressure at least equivalent to said preset value of the pressure limiting device (22, 122, 222).

2. Machine according to claim 1, **characterised in that** the selection means (17, 117) comprise current drop resistors (18, 118) insertable in series with the pump power supply through associated switches (19, 119) controlled by the measuring and control circuit (14, 114).

3. Machine according to claim 2, **characterised in that** the current resistors (18) are in series with respect to each other and the associated controlled switches (19) are connected to selectively short-circuit one or more resistors of the series.

4. Machine according to claim 1, **characterised in that** a half-wave rectifier diode (20, 120) is present in series with the pump.

5. Machine according to claim 2, **characterised in that** the said controlled switches (19, 119) are SCR switches.

6. Machine according to claim 1, **characterised in that** the measuring and control circuit (14, 114) is a microcontroller circuit provided with an analogue/digital device for converting the electric quantity to be measured.

7. Machine according to claim 1, **characterised in that** set in the measuring and control circuit (14, 114, 214) are preset machine power supply voltage threshold intervals, associated to each interval being a different pump power supply, the measuring and control circuit (14, 114, 214) being provided to determine, starting from the quantity measured, the interval within which the actual machine power supply voltage falls and control the power supply means to control the associated power supply to bring the pump supply voltage back to the preset interval.

8. Machine according to claim 7, **characterised in that** the preset intervals of the machine power supply voltage are between three and ten, preferably four.

9. Machine according to claim 7, **characterised in that** the preset intervals of the machine power supply voltage are equally distributed between a preset maximum value and a preset minimum value of the machine power supply voltage.

10. Machine according to claim 9, **characterised in that** the intervals for a 230 V (nominal) power network, considering a minimum preset value of about 198 V and a preset maximum value of about 254 V are about:
| | Power supply voltage interval |
|---|---|
| 1 | from 198 to 212 (198+14) |
| 2 | from 213 to 226 (198+28) |
| 3 | from 227 to 240 (198+42) |
| 4 | from 241 to 254 (198+56) |

11. Machine according to claims 2 and 7, **characterised in that**, at minimum level interval of machine power supply, associated in series with respect to the pump (12, 112) is a current drop resistor value substantially equivalent to zero.

12. Machine according to claim 1, **characterised in that** the preset variability of the machine power supply voltage is about 10% more or less, while the desired variation interval of the pump power supply is about 3% more or less.

13. Machine according to claim 1, **characterised in that** the pressure limiting device (22, 122, 222) is calibrated to a preset value of about 18 bars.

14. Machine according to claim 1, **characterised in that** the selection means (217) comprise a current regulator with phase cutting device.

15. Machine according to claim 1, **characterised in that** it comprises a device for counting the operations of the machine and **in that** the power supply selection means (17, 117, 217) are also controlled depending on the value in the counter.

16. Machine according to claim 1, **characterised in that** it comprises means (24, 124, 224) for detecting or setting the type of filter in the infuser group and **in that** the power supply selection means (17, 117, 217) are also controlled depending on the type of filter detected or set.

17. Method for supplying power to the pump (12, 112, 212) of a machine (10, 110, 210) for preparing an espresso coffee beverage, which provides for detecting the machine power supply voltage and automatically adjusting the pump power supply to compensate a variation of the machine power supply voltage and thus bring the pump power supply voltage within a preset variation interval, **characterised in that** a pressure limiting device (22, 122, 222) calibrated to a desired preset pressure value is arranged at the pump outlet and the pump (12, 112, 212) is selected to have, at its minimum power supply voltage, an outlet pressure at least equivalent to such preset value of the pressure limiting device (22, 122, 222).

18. Method according to claim 17, which provides for automatically positioning, in series with respect to the pump (12, 112), a preset current drop resistor value to compensate the variation of the machine power supply voltage and thus bring the pump power supply voltage within said preset variation interval.

19. Method according to claim 17, according to which an electronic circuit (14, 114) of the machine measures an electric quantity depending on the power supply of the machine and, depending on the measurement result, inserts a preset current drop resistor value to bring the pump power supply voltage within the preset variation interval.

20. Method according to claim 17, according to which the pressure limiting device (22, 122, 222) is calibrated to about 18 bars.

21. Method according to claim 17, according to which the voltage regulation on the pump (212) occurs through phase cutting on the power supply half-wave.

22. Method according to claim 17, according to which the pump power supply is regulated also depending on the number of operations of the machine (10, 110, 210).

23. Method according to claim 17, according to which the pump power supply is regulated also depending on the type of filter inserted in the infuser group.

## Patentansprüche

1. Maschine zum Zubereiten eines Kaffeegetränks, umfassend eine Quelle (11, 111, 211) heißen Wassers, eine Elektropumpe (12, 112, 212) zum Fördern solchen Wassers zu einer Aufgusseinheit (13, 113, 213), die das Kaffeepulver enthält, und eine Schaltung (14, 114, 214) zum Messen einer von der Versorgungsspannung der Maschine abhängigen elektrischen Größe und zum Steuern von Auswahlmitteln (17, 117, 217) zum Auswählen einer von der gemessenen Größe abhängigen Stromversorgung für die Pumpe, um die Versorgungsspannung der Pumpe in ein vorgegebenes Intervall zu bringen, **dadurch gekennzeichnet, dass** eine auf einen Vorgabewert eingestellte Druckbegrenzungseinrichtung (22, 122, 222) am Pumpenausgang in Reihe angeordnet ist, und dass am Ausgang der Pumpe (12, 112, 212) bei ihrer kleinsten Versorgungsspannung ein Druck vorliegt, der mindestens gleich dem besagten Vorgabewert der Druckbegrenzungseinrichtung (22, 122, 222) ist.

2. Maschine nach Anspruch 1, **dadurch gekennzeichnet, dass** die Auswahlmittel (17, 117) Vorwiderstände (18, 118) umfassen, die durch zugehörige Schalter (19, 119) in Reihe mit der Stromversorgung für die Pumpe zugeschaltet werden können, die von der Mess- und Steuereinheit (14, 114) gesteuert werden.

3. Maschine nach Anspruch 2, **dadurch gekennzeichnet, dass** die elektrischen Widerstände (18) miteinander in Reihe geschaltet sind und die zugehörigen gesteuerten Schalter (19) angeschlossen sind, um einen oder mehrere Widerstände der Reihe selektiv kurzzuschließen.

4. Maschine nach Anspruch 1, **dadurch gekennzeichnet, dass** eine Einweggleichrichterdiode (20, 120) mit der Pumpe in Reihe geschaltet ist.

5. Maschine nach Anspruch 2, **dadurch gekennzeichnet, dass** die gesteuerten Schalter (19, 119) Thyristorschalter sind.

6. Maschine nach Anspruch 1, **dadurch gekennzeichnet, dass** die Mess-und Steuerschaltung (14, 114) eine Mikrocontroller-Schaltung ist, die mit einer Analog/Digital-Einheit zum Umwandeln der zu messenden elektrischen Größe versehen ist.

7. Maschine nach Anspruch 1, **dadurch gekennzeichnet, dass** in der Mess- und Steuerschaltung (14, 114, 214) vorgegebene Schwellenintervalle der Versorgungsspannung der Maschine eingestellt sind, die mit jedem eine andere Stromversorgung für die Pumpe repräsentierenden Intervall verknüpft sind, wobei die Mess- und Steuerschaltung (14, 114, 214) dazu vorgesehen ist, ausgehend von der gemessenen Größe das Intervall zu bestimmen, in dem die gegenwärtige Versorgungsspannung der Maschine liegt, und die Stromversorgungsmittel so zu steuern, dass sie die angeschlossene Stromversorgung steuern, um die Stromversorgung der Pumpe zurück in das vorgegebene Intervall zu bringen.

8. Maschine nach Anspruch 7, **dadurch gekennzeichnet, dass** zwischen drei und zehn, vorzugsweise vier, vorgegebene Intervalle der Versorgungsspannung der Maschine vorgesehen sind.

9. Maschine nach Anspruch 7, **dadurch gekennzeichnet, dass** die vorgegebenen Intervalle der Versorgungsspannung der Maschine gleichmäßig zwischen einem vorgegebenen Höchstwert und einem vorgegebenen Mindestwert der Versorgungsspannung der Maschine verteilt sind.

10. Maschine nach Anspruch 9, **dadurch gekennzeichnet, dass** die Intervalle bei einem Stromnetz mit 230 V (Nennwert) unter der Annahme eines kleinsten Vorgabewerts von ungefähr 198 V und eines vorgegebenen Höchstwerts von ungefähr 254 V ungefähr folgendermaßen sind:
| | Versorgungsspannungsintervall |
|---|---|
| 1 | von 198 bis 212 (198+14) |
| 2 | von 213 bis 226 (198+28) |
| 3 | von 227 bis 240 (198+42) |
| 4 | von 241 bis 254 (198+56) |

11. Maschine nach Anspruch 2 und 7, **dadurch gekennzeichnet, dass** im kleinsten Schwellenintervall der Stromversorgung der Maschine ein im Wesentlichen Null entsprechender Wert eines Vorwiderstands in Reihe mit der Pumpe (12, 112) verknüpft ist.

12. Maschine nach Anspruch 1, **dadurch gekennzeichnet, dass** die vorgegebene Veränderlichkeit der Versorgungsspannung der Maschine ungefähr plus/minus 10% beträgt, während das gewünschte Schwankungsintervall der Stromversorgung der Pumpe ungefähr plus/minus 3% beträgt.

13. Maschine nach Anspruch 1, **dadurch gekennzeichnet, dass** die Druckbegrenzungseinrichtung (22, 122, 222) auf einen Vorgabewert von ungefähr 18 bar eingestellt ist.

14. Maschine nach Anspruch 1, **dadurch gekennzeichnet, dass** die Auswahlmittel (217) einen Stromregler mit Phasenanschnitteinrichtung umfassen.

15. Maschine nach Anspruch 1, **dadurch gekennzeichnet, dass** sie eine Einrichtung zum Zählen der Schaltspiele der Maschine umfasst und dass die Mittel (17, 117, 217) zum Auswählen der Stromversorgung auch in Abhängigkeit vom Wert im Zähler gesteuert werden.

16. Maschine nach Anspruch 1, **dadurch gekennzeichnet, dass** sie Mittel (24, 124, 224) zum Detektieren oder Einstellen des Typs von Filter in der Aufgusseinheit umfasst und dass die Mittel (17, 117, 217) zum Auswählen der Stromversorgung auch in Abhängigkeit vom detektierten oder eingestellten Filtertyp gesteuert werden.

17. Verfahren zur Stromversorgung der Pumpe (12, 112, 212) einer Maschine (10, 110, 210) zum Zubereiten eines Espressokaffeegetränks, welches das Detektieren der Versorgungsspannung der Maschine und die automatische Korrektur der Versorgungsspannung der Pumpe vorsieht, um eine Änderung der Versorgungsspannung der Maschine auszugleichen und so die Versorgungsspannung der Pumpe in ein vorgegebenes Schwankungsintervall zu bringen, **dadurch gekennzeichnet, dass** eine auf einen gewünschten vorgegebenen Druckwert eingestellte Druckbegrenzungseinrichtung (22, 122, 222) am Pumpenausgang angeordnet ist und die Pumpe (12, 112, 212) so gewählt ist, dass sie bei ihrer kleinsten Versorgungsspannung einen Ausgangsdruck hat, der mindestens gleich diesem Vorgabewert der Druckbegrenzungseinrichtung (22, 122, 222) ist.

18. Verfahren nach Anspruch 17, das die automatische Schaltung in Reihe mit der Pumpe (12, 112) eines vorgegebenen Werts eines Vorwiderstands vorsieht, um die Änderung der Versorgungsspannung der Maschine auszugleichen und so die Versorgungsspannung der Pumpe in das besagte vorgegebene Schwankungsintervall zu bringen.

19. Verfahren nach Anspruch 17, gemäß dem eine elektronische Schaltung (14, 114) der Maschine eine von der Stromversorgung der Maschine abhängige elektrische Größe misst und in Abhängigkeit vom Messergebnis einen vorgegebenen Wert eines Vorwiderstands zuschaltet, um die Versorgungsspannung der Pumpe in das vorgegebene Schwankungsintervall zu bringen.

20. Verfahren nach Anspruch 17, gemäß dem die Druckbegrenzungseinrichtung (22, 122, 222) auf ungefähr 18 bar einstellt ist.

21. Verfahren nach Anspruch 17, gemäß dem die Spannungsregelung der Pumpe (212) durch Phasenanschnitt in der Halbwelle der Stromversorgung erfolgt.

22. Verfahren nach Anspruch 17, gemäß dem die Stromversorgung der Pumpe auch in Abhängigkeit von der Schaltzahl der Maschine (10, 110, 210) geregelt wird.

23. Verfahren nach Anspruch 17, gemäß dem die Stromversorgung der Pumpe auch in Abhängigkeit von dem in die Aufgusseinheit eingesetzten Filtertyp geregelt wird.

## Revendications

1. Machine pour préparer une boisson de café comprenant une source (11, 111, 211) d'eau chaude, une pompe électrique (12, 112, 212) pour amener cette eau à un groupe d'infusion (13, 113, 213) contenant la poudre de café et un circuit (14, 114, 214) pour mesurer une quantité électrique dépendant de la tension d'alimentation électrique de la machine et pour commander des moyens de sélection (17, 117, 217) pour sélectionner une alimentation électrique de pompe en fonction de la quantité mesurée pour amener la tension d'alimentation électrique de pompe dans un intervalle prédéterminé, **caractérisée en ce qu'**un dispositif limiteur de pression (22, 122, 222) étalonné à une valeur prédéterminée est agencé en série avec le refoulement de la pompe et la pompe (12, 112, 212), à sa tension d'alimentation minimale, a un refoulement avec une pression au moins équivalente à ladite valeur prédéterminée du dispositif limiteur de pression (22, 122, 222).

2. Machine selon la revendication 1, **caractérisée en ce que** les moyens de sélection (17, 117) comprennent des résistances d'abaissement de courant (18, 118) pouvant être insérées en série avec l'alimentation électrique de pompe par l'intermédiaire de commutateurs associés (19, 119) commandés par le circuit de mesure et de commande (14, 114).

3. Machine selon la revendication 2, **caractérisée en ce que** les résistances de courant (18) sont en série les unes par rapport aux autres et les commutateurs commandés associés (19) sont connectés pour court-circuiter sélectivement une ou plusieurs résistances de la série.

4. Machine selon la revendication 1, **caractérisée en ce qu'**une diode de redressement à simple alternance (20, 120) est présente en série avec la pompe.

5. Machine selon la revendication 2, **caractérisée en ce que** lesdits commutateurs commandés (19, 119) sont des commutateurs SCR.

6. Machine selon la revendication 1, **caractérisée en ce que** le circuit de mesure et de commande (14, 114) est un circuit de microcontrôleur muni d'un dispositif analogique/numérique pour convertir la quantité électrique à mesurer.

7. Machine selon la revendication 1, **caractérisée en ce que** des intervalles prédéterminés de seuil de tension d'alimentation électrique de machine sont programmés dans le circuit de mesure et de commande (14, 114, 214), à chaque intervalle étant associé une alimentation électrique de pompe différente, le circuit de mesure et de commande (14, 114, 214) étant prédisposé pour déterminer, à partir de la quantité mesurée, l'intervalle dans lequel se trouve la tension actuelle d'alimentation électrique de la machine et commande les moyens d'alimentation électrique pour contrôler l'alimentation électrique associée pour ramener la tension d'alimentation de pompe dans l'intervalle prédéterminé.

8. Machine selon la revendication 7, **caractérisée en ce que** les intervalles prédéterminés de la tension d'alimentation électrique de la machine sont entre trois et dix, de préférence quatre.

9. Machine selon la revendication 7, **caractérisée en ce que** les intervalles prédéterminés de la tension d'alimentation électrique de la machine sont distribués uniformément entre une valeur maximale prédéterminée et une valeur minimale prédéterminée de la tension d'alimentation électrique de la machine.

10. Machine selon la revendication 9, **caractérisée en ce que** les intervalles pour un réseau électrique de 230 V (nominal), considérant une valeur minimale prédéterminée d'environ 198 V et une valeur maximale prédéterminée d'environ 254 V sont d'environ :
| | Intervalle de tension d'alimentation électrique |
|---|---|
| 1 | de 198 à 212 (198+14) |
| 2 | de 213 à 226 (198+28) |
| 3 | de 227 à 240 (198+42) |
| 4 | de 241 à 254 (198+56) |

11. Machine selon les revendications 2 et 7, **caractérisée en ce que**, dans l'intervalle de niveau minimum de l'alimentation électrique de la machine, une valeur de résistance d'abaissement de tension sensiblement équivalente à zéro est associée en série par rapport à la pompe (12, 112).

12. Machine selon la revendication 1, **caractérisée en ce que** la variabilité prédéterminée de la tension d'alimentation électrique de la machine est d'environ 10% plus ou moins, alors que l'intervalle de variation désiré de l'alimentation électrique de la pompe est d'environ 3% plus ou moins.

13. Machine selon la revendication 1, **caractérisée en ce que** le dispositif limiteur de pression (22, 122, 222) est étalonné à une valeur prédéterminée d'environ 18 bar.

14. Machine selon la revendication 1, **caractérisée en ce que** les moyens de sélection (217) comprennent un régulateur de courant avec dispositif de découpage de phase.

15. Machine selon la revendication 1, **caractérisée en ce qu'**elle comprend un dispositif pour compter les opérations de la machine et **en ce que** les moyens de sélection d'alimentation électrique (17, 117, 217) sont également commandés en fonction de la valeur dans le compteur.

16. Machine selon la revendication 1, **caractérisée en ce qu'**elle comprend des moyens (24, 124, 224) pour détecter ou fixer le type de filtre dans le groupe d'infusion et **en ce que** les moyens de sélection d'alimentation électrique (17, 117, 217) sont également commandés en fonction du type de filtre détecté ou fixé.

17. Procédé pour fournir l'énergie électrique à la pompe (12, 112, 212) d'une machine (10, 110, 210) pour préparer une boisson de café expresso, qui fournit une détection de la tension d'alimentation électrique de la machine et un réglage automatique de la tension électrique de la pompe pour compenser une variation de la tension d'alimentation électrique de la machine et amener ainsi la tension d'alimentation électrique de pompe dans un intervalle de variation prédéterminé, **caractérisé en ce qu'**un dispositif limiteur de pression (22, 122, 222) étalonné à une valeur de pression prédéterminée désirée est agencé au niveau du refoulement de la pompe et la pompe (12, 112, 212) est sélectionnée pour avoir, à sa tension d'alimentation électrique minimale, une pression de refoulement au moins équivalente à cette valeur prédéterminée du dispositif limiteur de pression (22, 122, 222).

18. Procédé selon la revendication 17, qui fournit le positionnement automatique, en série par rapport à la pompe (12, 112), d'une valeur prédéterminée de résistance d'abaissement de courant pour compenser la variation de la tension d'alimentation électrique de la machine et amener ainsi la tension d'alimentation électrique de pompe dans ledit intervalle de variation prédéterminé.

19. Procédé selon la revendication 17, selon lequel un circuit électronique (14, 114) de la machine mesure une quantité électrique dépendant de l'alimentation électrique de la machine et, en fonction du résultat de mesure, insère une valeur prédéterminée de résistance d'abaissement de courant pour amener la tension d'alimentation électrique de pompe dans l'intervalle de variation prédéterminé.

20. Procédé selon la revendication 17, selon lequel le dispositif limiteur de pression (22, 122, 222) est étalonné à environ 18 bar.

21. Procédé selon la revendication 17, selon lequel le réglage de tension sur la pompe (212) est effectué par découpage de phase sur la demi-onde d'alimentation électrique.

22. Procédé selon la revendication 17, selon lequel l'alimentation électrique de la pompe est régulée également en fonction du nombre d'opérations de la machine (10, 110, 210).

23. Procédé selon la revendication 17, selon lequel l'alimentation électrique des la pompe est régulée également en fonction du type de filtre inséré dans le groupe d'infusion.
